# EUROPÄISCHE PATENTSCHRIFT

(11) **EP 0 455 593 B1**
(45) Veröffentlichungstag und Bekanntmachung des Hinweises auf die Patenterteilung: **12.10.1994**
(21) Anmeldenummer: 91810308.6
(22) Anmeldetag: 24.04.1991
(51) Int. Cl.: B65D 5/50, B65D 81/16, B29C 51/26

(54) **Verpackung für stossempfindliche Gebrauchsgüter**
Package for goods sensitive to shocks
Emballage pour produits sensibles aux chocs

(30) Priorität: 04.05.1990 CH 1512/90
(43) Veröffentlichungstag der Anmeldung: 06.11.1991
(73) Patentinhaber: GÜNTER WITZ AG, CH-8105 Regensdorf (CH)
(72) Erfinder: Witz, Günter, CH-8050 Zürich (CH)
(74) Vertreter: Eschmann, Heinz

(56) Entgegenhaltungen:
- EP-A- 0 363 650
- DE-U- 8 530 488
- FR-A- 2 306 140
- GB-A- 1 545 051

## Beschreibung

Die Erfindung betrifft eine Verpackung gemäss Oberbegriff von Patentanspruch 1.

Verpackungen von Gebrauchsgütern sollen bekanntlich in zahlreichen Fällen das Gut nicht nur umhüllen, sondern gleichzeitig so innerhalb der Verpackung elastisch abstützen, dass das stossempfindliche bzw. zerbrechliche Gut an Stützelementen anliegt und durch deren federnde Wirkung gegen Stösse geschützt ist. Die bekannten Packungen, die beispielsweise für Schokoladenprodukte wie Ostereier, sowie für Glaswaren etc. verwendet werden, weisen daher vielfach zusätzliche Einlagen auf, welche sich einerseits an die Innenwand der Packung anlegen und andererseits das federnd abzustützende Gut an mindestens zwei einander gegenüberliegenden Stellen umfassen.

Bei dieser bekannten Verpackungsart, für die zum Beispiel die deutsche Gebrauchsmusterschrift DE-GM 85 30488 eine mögliche Ausführung beschreibt, sind Aussenpackung und Einlage immer zwei getrennte Verpackungsteile, die meist auch aus verschiedenen Materialien hergestellt werden, beispielsweise eine Karton-Aussenpackung, eventuell mit Sichtfenster, und eine thermogeformte Kunststoff-Einlage. Ein weiteres Beispiel einer solchen warenschützenden Einlage aus thermoformbarem Material offenbart die französische Patentanmeldung Nr. 2 306 140. Die dort beschriebene Einlage umfasst zwei Schalen für das Verpackungsgut, die über ein Verbindungsstück aufeinanderklappbar verbunden sind und deren Ränder zur Abstützung der Schalen bis auf eine oberhalb des Schalengrunds liegenden Ebene hochgezogen sind. Sie könnte im Prinzip auch ohne Aussenpackung verwendet werden, was jedoch durch die dabei gebildeten komplizierten Aussenflächen eine Verpackung ergibt, die in keiner Weise schachtelähnlich ist und daher schlecht zu präsentieren und unangenehm anzufassen ist und nur schwierig gestapelt werden kann.

Die bekannten warenschützenden Zusatzeinlagen weisen einige Nachteile auf. Sie bedingen eine relativ aufwendige Herstellung und einen zusätzlichen Aufwand an Material, Energie, Zeit und Kosten. Ausserdem müssen die Einlagen beim Verpacken des Gutes gesondert, üblicherweise von Hand, eingesetzt werden, und schliesslich sind Packungen dieser Art nicht stapelfähig.

Es ist die Aufgabe der vorliegenden Erfindung, diese Nachteile der bekannten Packungen zu beheben und demgemäss eine Verpackung der eingangs definierten Art vorzuschlagen, welche insbesondere die einwandfreie, stossdämpfende Abstützung des Gutes gewährleistet, ohne dass innerhalb derselben zusätzliche Stützelemente einzusetzen wären, und welche überdies ein handliches und ansprechendes Äusseres bietet.

Diese Aufgabe wird gelöst durch die im kennzeichnenden Teil von Patentanspruch 1 definierte Erfindung. Bevorzugte Ausführungs formen ergeben sich aus den abhängigen Patentansprüchen.

Die erfindungsgemässe Integration von Thermoverformungen, insbesondere Stützprofilen, in einen nach dem Kartonageprinzip gestanzten und zur Falzung gerillten Zuschnitt erbringt ganz wesentliche Vorteile. So beanspruchen die Stützprofile kein zusätzliches Material, was gegenüber den herkömmlichen, mit einsetzbaren Zusatzelementen versehenen Packungen zu einer Materialersparnis von 30 bis 50 % führt, und damit natürlich in der Folge auch entsprechend weniger Abfall bedeutet. Weiter sind die flach angelieferten Zuschnitte ineinander schachtelbar und können somit gut gestapelt werden, sodass wenig Lagerraum benötigt wird. Ausserdem entfällt eine getrennte Lagerung von Aussenpackung und Stützelementen. Da die Verpackung einstückig ist, wird auch das Abfüllen des Verpackungsguts und das Montieren der Verpackung wesentlich vereinfacht. Zudem ist die fertig montierte Verpackung auch im Verkauf gut stapelbar und überdies sehr präsentabel, insbesondere weil sie in Ausführung als Sichtpackung (unter Verwendung von transparenter Folie) von allen Seiten gut und optisch ansprechend einzusehen ist.

Ein weiterer Vorteil der erfindungsgemässen Verpackung ist es, dass sie aus einem einzigen Werkstoff hergestellt ist, denn damit erfüllt sie die immer aktueller werdende, ökologisch begründete Forderung nach Verpackungen aus Monomaterialien, welche rezykliert werden können, ohne vorangehend in verschiedene Materialien aufgetrennt zu werden.

Die Erfindung lässt sich auf alle gängigen Schachtel typen, d.h. Faltschachteln, Stulpschachteln usw. anwenden, und die Ausführung der Verpackung kann in transparenter oder farbiger Folie erfolgen, wobei auch eine leitende Folie für elektrische Spezialartikel gewählt werden kann.

Nachstehend wird anhand der beiliegenden Zeichnung ein Ausführungsbeispiel des Erfindungsgegenstandes einschliesslich einiger Varianten beschrieben. Es zeigen:
Fig. 1 eine fertig geformte und zugeschnittene Folie zur Erstellung einer quaderförmigen Packung,
Fig. 2 die in Fig. 1 gezeigte Folie beim Zusammenfügen zur fertigen Packung,
Fig. 3a die fertige, eine quaderförmige Keramikvase enthaltende Packung,
Fig. 3b eine bevorzugte Verbindungsart der beim Zusammenfügen aufeinanderstossenden Seitenwände,
Fig.4 ein weiteres Beispiel einer quaderförmigen Packung, die zur Aufnahme einer Flasche dient,
Fig. 5 den unteren Abschnitt einer zur Aufnahme eines Schokoladen-Ostereis dienenden Packung,
Fig. 6 eine entsprechende Seitenansicht, und
Fig. 7 ein Beispiel einer Packung, die nur in innenliegenden Zuschnitt-Teilen Stützprofile aufweist.

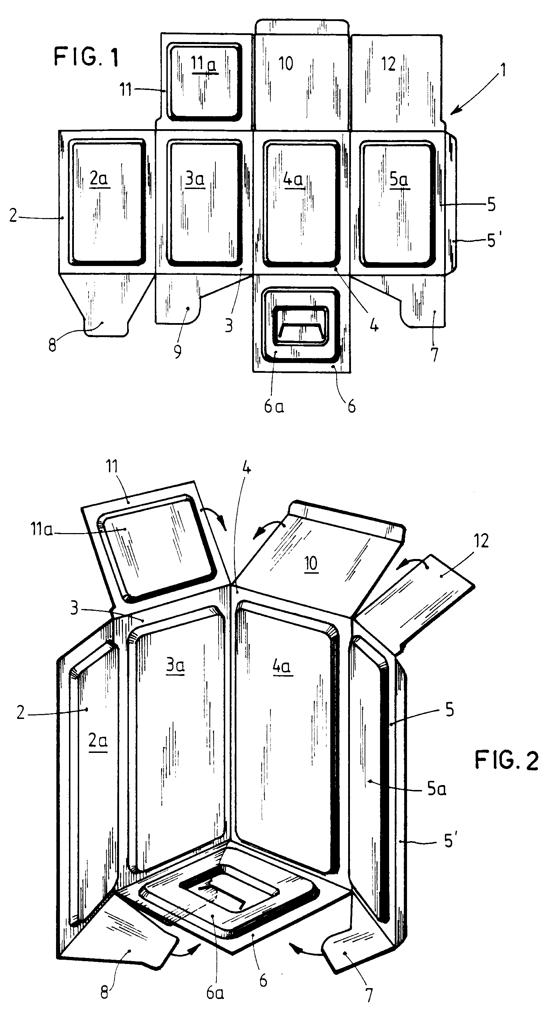

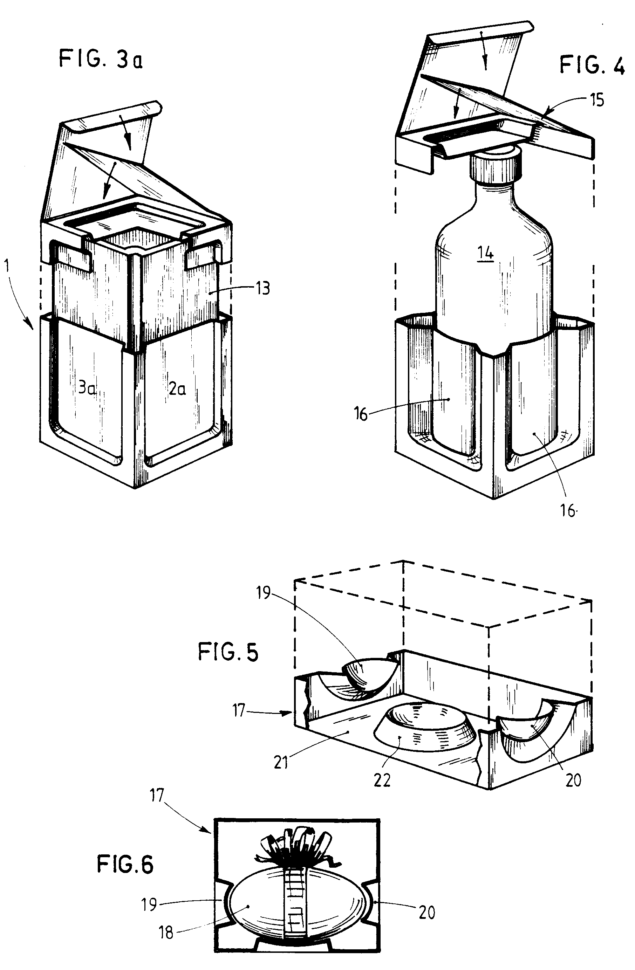

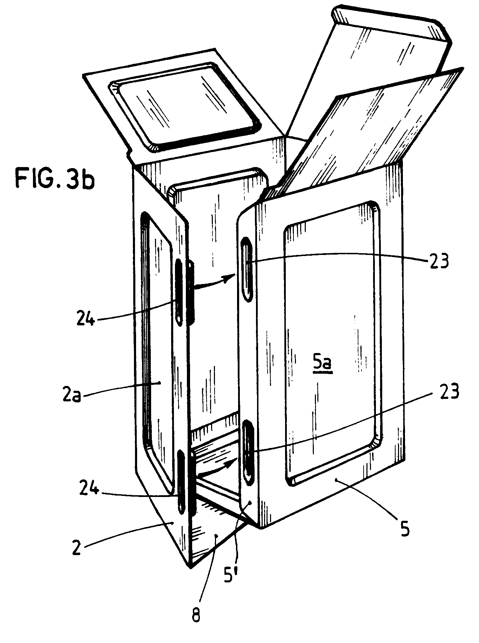

Die in Fig. 1 gezeigte, beispielsweise aus Polyäthylen, Polyester oder Polyvinylchlorid hergestellte Folie 1, die sich zu der quaderförmigen, in Fig. 3a dargestellten Packung zusammenfügen lässt, weist vier Seitenwände 2 bis 5, einen Boden 6 mit den zugehörigen Zusatzlappen 7, 8 und 9 sowie einen Deckel 10 mit einem Stützlappen 11 und einer Zusatzlasche 12 auf. Alle vier Seitenwände 2 bis 5 sind mit einem nach innen eingeformten Stützprofil 2a, 3a, 4a und 5a versehen; auch im Boden 6 ist ein nach oben ragendes Stützprofil 6a und im oberen Stützlappen 11 ein nach unten bzw. innen ragendes Stützprofil 11a eingeformt. Sämtliche erwähnten und auf der Zeichnung sichtbaren Einzelelemente bilden ein einziges Teil, das in einem entsprechenden Grundwerkzeug unter Wärmezufuhr verformt und anschliessend beschnitten und mit Falzrillen versehen wurde. Dieses Teil gleicht einem Zuschnitt, wie er ähnlich von der Kartonage her bekannt ist, jedoch versehen mit durch Thermoverformung erzeugten, integrierten Stützprofilen (2a, 3a, 4a, 5a, 6a, 11a).

Die Stützprofile 2a bis 6a und 11a sind den Konturen des elastisch abzustützenden Gegenstandes angepasst. Im vorliegenden Falle ist dieser Gegenstand eine quaderförmige Keramikvase 13, deren ebene Wände an den Stützprofilen der Packung unter leichtem elastischem Druck anliegen.

In Fig. 2 ist durch Pfeile veranschaulicht, wie sich die in Fig. 1 dargestellte Folie mit wenigen Griffen zur Packung gemäss Fig. 3a zusammenfügen lässt.

Die beim Zusammenfügen aneinanderstossenden Seiterwände 2 und 5 können bei Bedarf mittels eines Verbindurgslappens 5′ fest verbunden werden, beispielsweise, indem der Verbindungslappen 5′ mit der Seitenwand 2 verschweisst oder verklebt wird. Bei einer besonderen Ausführungsform (vgl. Fig. 3b) sind zwecks besonders einfacher Verbindung der aufeinanderstossenden Seitenwände im Verbindungslappen 5′ spezielle Einbuchtungen 23 eingeformt, in welche sich entsprechend in der Seitenwand 2 eingeformte Ausbuchtungen 24 druckknopfartig eindrücken lassen.

Ein weiteres Beispiel der erfindungsgemässen Packung zeigt Fig. 4. Hier ist der Gegenstand, welcher in die mit 15 bezeichnete Packung eingesetzt werden soll, eine Flasche 14, und dementsprechend sind aus den Packungswänden seitliche Begrenzungsprofile 16 herausgeformt, welche das Flaschenprofil umschliessen. Im Prinzip würde es genügen, zwei einander gegenüberliegende solcher Profile vorzusehen, während in Fig. 4 vier um jeweils 90° gegeneinander versetzte Profile 16 gezeigt sind. Boden und Deckel können in diesem Falle gemäss Fig. 1 bis Fig. 3 geformt oder auch den Umrissen von Flaschenhals und Flaschenboden noch besser angepasst sein.

Die in Fig. 5 und 6 gezeigte Packung 17 dient der Aufnahme eines Schokoladen-Ostereis 18. Die beiden einander gegenüberliegenden schmalen Seitenwände sind mit gekrümmten Stützprofilen 19 und 20 versehen, die den Endabschnitten der Eiform angepasst sind. Der in Fig. 5 gezeigte Boden 21 der Packung weist ein Stützprofil 22 mit einer etwas flacheren, dem Eikörper entsprechenden Krümmung auf.

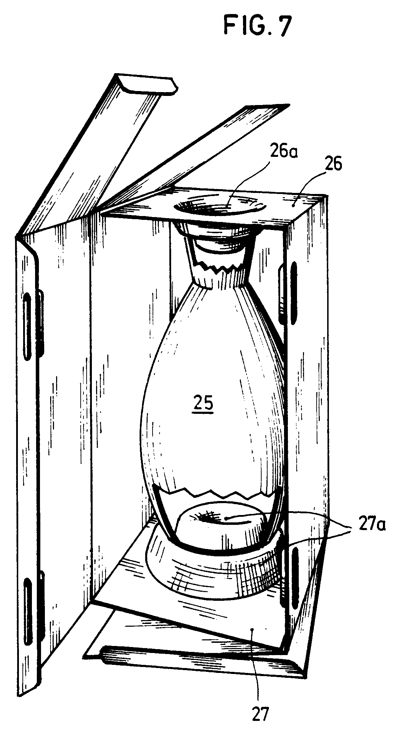

Fig. 7 veranschaulicht ein weiteres Ausführungsbeispiel einer erfindungsgemässen Packung, die beispielsweise für eine chinesische Vase 25 verwendet werden kann. Bei dieser Packung weisen nur ein Stützlappen 26 und ein Bodenteil 27 des Zuschnitts Stützprofile 26a und 27a auf. Die Stützprofile sind so geformt, dass sie den Gegenstand auch seitlich abstützen und diesen damit allseitig in seiner Lage festhalten. In dieser Ausführungsform ergibt die zusammengefügte Packung eine Schachtel mit Aussenwänden ohne jede Profilierung. Sie ist deshalb besonders vorteilhaft zu handhaben und erlaubt eine ausgezeichnete Sicht auf den verpackten Gegenstand.

Die Thermoformung kann in vielen Fällen mittels eines einzigen Grundwerkzeugs erfolgen, in welches sich die von der jeweiligen Form des zu verpackenden Gegenstandes geforderten Profile einsetzen lassen. Durch den blossen Austausch der Profile lässt sich somit ein einziges Grundwerkzeug für die Herstellung von Packungen für verschiedenartig geformte Güter verwenden.

Das beschriebene Verfahren lässt sich bei Bedarf auch zur Herstellung von Verpackungen einsetzen, welche - ganz abgesehen von der Stossempfindlichkeit des Gutes - eine oder mehrere mit einem Zierprofil versehene Wandpartien aufweisen.

## Patentansprüche

1. Verpackung, die durch Aufrichten und Zusammenfügen eines aus einer Kunststoff-Folie einstückig ausgestanzten oder -geschnittenen Zuschnitts erstellt ist, wobei der Zuschnitt in zu einem Kartonage-Zuschnitt analoger Weise durch Falzrillen voneinander abgegrenzte Felder (2, 3, 4, 5, 5', 6, 7, 8, 9, 10, 11, 12; 26, 27) aufweist, welche die Aussenwände der Verpackung sowie für das Zusammenfügen und Stabilisieren der Verpackung vorgesehene Zusatzlappen bilden, dadurch *gekennzeichnet*, dass die Kunststoff-Folie eine thermoformbare Folie ist und im Zuschnitt aus wenigstens einem der Felder mittels Thermoformung wenigstens ein gegen das Innere der Verpackung vorstehendes Stützprofil (2a, 3a, 4a, 5a, 6a, 11a; 16; 19, 20, 22; 26a, 27a) für ein aufzunehmendes Gut (13; 14; 18; 25) herausgeformt ist.

2. Verpackung nach Patentanspruch 1, dadurch *gekennzeichnet*, dass an mindestens zwei einander gegenüberliegenden Stellen der Verpackung Stützprofile (2a, 4a; 3a, 5a; 6a, 11a; 16; 19, 20; 26a, 27a) so herausgeformt sind, dass sie von mindestens zwei Seiten her am aufzunehmenden Gut (13; 14; 18; 25) anliegen und dieses somit auch ohne zusätzliche Verpackungseinlagen in seiner Lage stossdämpfend stützen.

3. Verpackung nach Patentanspruch 1 oder 2, *dadurch gekennzeichnet*, dass dieselbe quaderförmig ist und demgemäss vier im rechten Winkel zueinander angeordnete Seitenwände (2 bis 5), einen Boden (6) und einen Deckel (10) aufweist, wobei je nach Bedarf mindestens der Boden (6) und der Deckel (10) oder ein im Bereich des Deckels liegender Stützlappen (11) sowie gegebenenfalls zwei einander gegenüberliegende Seitenwände mit einem nach innen aus der Kunststoff-Folie herausgeformten Stützprofil (2a bis 5a, 6a und 11a) versehen sind.

4. Verpackung nach einem der Patentansprüche 1 bis 3, *dadurch gekennzeichnet*, dass die genannten Stützprofile (2a, 3a, 4a, 5a, 6a, 11a; 16; 19, 20, 22; 26a, 27a) den Umrissen des aufzunehmenden Guts angepasst sind.

5. Verpackung nach einem der Patentansprüche 1 bis 4, *dadurch gekennzeichnet*, dass die Kunststoff-Folie aus Polyäthylen, Polyester oder Polyvinylchlorid besteht.

## Claims

1. Packaging produced by raising and joining together a blank which is punched or cut in one piece out of a plastic sheet, the blank having sections (2, 3, 4, 5, 5', 6, 7, 8, 9, 10, 11, 12; 26, 27) which are delimited from one another by folding grooves in a manner analogous to a cardboard blank and form the outer walls of the packaging and additional tabs provided for joining together and stabilizing the packaging, characterized in that the plastic sheet is a thermoformable sheet and at least one support profile (2a, 3a, 4a, 5a, 6a, 11a; 16; 19, 20, 22; 26a, 27a) which projects towards the interior of the packaging and is intended for an article (13; 14; 18; 25) to be received is formed in the blank from at least one of the sections by thermoforming.

2. Packaging according to Patent Claim 1, characterized in that support profiles (2a, 4a; 3a, 5a; 6a, 11a; 16; 19, 20; 26a, 27a) are formed at at least two mutually opposite points of the packaging such that they bear against the article (13; 14; 18; 25) to be received from at least two sides and thus support it in a shock-absorbing manner in its position even without additional packaging inserts.

3. Packaging according to Patent Claim 1 or 2, characterized in that said packaging is cuboidal and accordingly has four side walls (2 to 5) arranged at right angles to one another, a base (6) and a lid (10), at least the base (6) and the lid (10) or a support tab (11) located in the region of the lid, and if appropriate, two mutually opposite side walls being provided, if required, with a support profile (2a to 5a, 6a and 11a) formed inwardly from the plastic sheet.

4. Packaging according to one of Patent Claims 1 to 3, characterized in that the said support profiles (2a, 3a, 4a, 5a, 6a, 11a; 16; 19, 20, 22; 26a, 27a) are adapted to the outlines of the article to be received.

5. Packaging according to one of Patent Claims 1 to 4, characterized in that the plastic sheet consists of polyethylene, polyester or polyvinylchloride.

## Revendications

1. Emballage, fabriqué par dressage et assemblage d'un flan obtenu d'un seul tenant, par estampage ou découpage, à partir d'une feuille en matière synthétique, le flan présentant, de manière analogue à un flan de cartonnage, des zones (2, 3, 4, 5, 5', 6, 7, 8, 9, 10, 11, 12; 26, 27) délimitées les unes par rapport aux autres par des rainures de pliage, zones constituant les parois extérieures de l'emballage ainsi que des languettes additionnelles prévues pour l'assemblage et la stabilisation de l'emballage, caractérisé en ce que la feuille en matière synthétique est une feuille thermoformable et dans le flan est formé un profil de soutien (2a, 3a, 4a, 5a, 6a, 11a; 16; 19, 20, 22; 26a, 27a) pour un produit (13; 14; 18; 25) à recevoir, ce profil de soutien faisant saillie vers l'intérieur de l'emballage et étant obtenu par thermoformage à partir d'au moins l'une des zones.

2. Emballage selon la revendication 1, caractérisé en ce que, en au moins deux endroits mutuellement opposés de l'emballage, des profils de soutien (2a, 3a, 4a, 5a, 6a, 11a; 16; 19, 20; 26a, 27a) sont formés de manière qu'ils appuient au moins de deux côtés sur le produit (13; 14; 18; 25) à recevoir et le maintiennent ainsi également en place, à l'abri des chocs, sans nécessiter de garnissages d'emballage supplémentaires.

3. Emballage selon la revendication 1 ou 2, caractérisé en ce qu'il est parallélépipédique et présente, par conséquent, quatre parois latérales (2 à 5) disposées à angle droit les unes par rapport aux autres, un fond (6) et un couvercle (10), étant entendu que, selon les besoins, au moins le fond (6) et le couvercle (10), ou une languette d'appui (11) située dans la zone du couvercle ainsi que, le cas échéant, deux parois latérales mutuellement opposées, sont pourvues d'un profil de soutien (2a à 5a, 6a et 11a), formé à partir d'une feuille en matière synthétique, et dirigé vers l'intérieur.

4. Emballage selon l'une quelconque des revendications 1 à 3, caractérisé en ce que les profils de soutien (2a, 3a, 4a, 5a, 6a, 11a; 16; 19, 20, 22; 26a, 27a) cités sont adaptés au contour du produit à recevoir.

5. Emballage selon l'une quelconque des revendications 1 à 4, caractérisé en ce que la feuille en matière synthétique est en polyéthylène, en polyester ou polychlorure de vinyle.
